# EUROPEAN PATENT APPLICATION

(11) **EP 2 463 013 A1**
(43) Date of publication of application: **13.06.2012**
(21) Application number: 10194797.6
(22) Date of filing: 13.12.2010
(51) Int. Cl.: B01D 53/12

(54) **Process for removing carbon dioxide from a gas stream**

(71) Applicant: Shell Internationale Research Maatschappij B.V., 2596 HR The Hague (NL)
(72) Inventor: Dathe, Hendrik, 1031 HW Amsterdam (NL); Geerlings, Jacobus Johannes Cornelis, 1031 HW Amsterdam (NL); Kuipers, Herman Pieter Charles Eduard, 1031 HW Amsterdam (NL); Sprachmann, Gerald, 1031 HW Amsterdam (NL); Stil, Hans Arie, 1031 HW Amsterdam (NL)
(74) Representative: Matthezing, Robert Maarten

(57) **Abstract**

The invention relates to a process for removing carbon dioxide from a carbon dioxide containing gas (1) stream comprising the steps of:
(a) contacting the carbon dioxide containing gas stream with fluidized solid adsorbent in a riser adsorption zone (2) to obtain a carbon dioxide-depleted gas stream and fluidized carbon dioxide-enriched solid adsorbent;
(b) separating (4) at least part (5) of the carbon dioxide-depleted gas stream from the fluidized carbon dioxide-enriched solid adsorbent (6);
(c) passing at least part of the fluidized carbon dioxide-enriched solid adsorbent (6) as obtained in step (b) to a riser regeneration zone (7) to obtain a carbon dioxide-enriched gas stream and a fluidized carbon dioxide-depleted solid adsorbent;
(d) separating (10) at least part (11) of the carbon dioxide-enriched gas stream as obtained in step (c) from the fluidized carbon dioxide-depleted solid adsorbent (12) as obtained in step (c); and
(e) recycling at least part (12) of the fluidized carbon dioxide-depleted solid adsorbent as obtained in step (d) to step (a).

## Description

### Field of the invention

The present invention relates to a process for removing carbon dioxide from a gas stream, especially flue gases.

### Background of the invention

During the last decades there has been a substantial global increase in the amount of carbon dioxide emission to the atmosphere. Emissions of carbon dioxide into the atmosphere are thought to be harmful due to its "greenhouse gas" property, contributing to global warming. Following the Kyoto agreement, carbon dioxide emission has to be reduced in order to prevent or counteract unwanted changes in climate. The largest sources of carbon dioxide emission are combustion of fossil fuels, for example coal or natural gas, for electricity generation and the use of petroleum products as a transportation and heating fuel. These processes result in the production of gases comprising carbon dioxide. Thus, removal of at least part of the carbon dioxide prior to emission of these gases into the atmosphere is desirable.

Processes for removal of carbon dioxide from gases are known in the art. For example, in EP 0,744,987 a process for removing and preventing emissions of carbon dioxide into the atmosphere is described. In the process described in EP 0,744,987, carbon dioxide is transferred from exhaust gas exiting a gas turbine to an absorption column where it is contacted with an absorption liquid. Subsequently, the carbon dioxide enriched absorption liquid is regenerated by passing it to a stripper unit which is operated at a temperature of 120-150°C where the carbon dioxide is released from the absorption liquid. A severe drawback of the process described in EP 0,744,987 is the high energy consumption in the stripper unit, leading to a lower overall energy output. To improve the efficiency, the exhaust gas exiting the gas turbine is passed through a heat recovery steam generator, producing high pressure steam and low pressure steam. The low pressure steam is used to achieve the elevated temperatures needed for the regeneration of the absorbing liquid. Although this results in a better overall efficiency, additional equipment is needed.

Thus, there is a need for a more energy- efficient and simple process for removal of carbon dioxide from gases.

### Summary of the invention

It has now been found that carbon dioxide can effectively be removed from a gas stream in a very energy-efficient and relatively simple manner when a gas stream is contacted with a regenerable solid adsorbent in a circulating fluidized bed system.

Accordingly, the present invention relates to a process for removing carbon dioxide from a gas stream comprising the steps of:
(a) contacting the gas stream with a fluidized solid adsorbent in a riser adsorption zone to obtain a carbon dioxide-depleted gas stream and fluidized carbon dioxide-enriched solid adsorbent;
(b) separating at least part of the carbon dioxide-depleted gas stream from the fluidized carbon dioxide-enriched solid adsorbent;
(c) passing at least part of the fluidized carbon dioxide-enriched solid adsorbent as obtained in step (b) to a riser regeneration zone to obtain a carbon dioxide-enriched gas stream and a fluidized carbon dioxide-depleted solid adsorbent;
(d) separating at least part of the carbon dioxide-enriched gas stream as obtained in step (c) from the fluidized carbon dioxide-depleted solid adsorbent as obtained in step (c); and
(e) recycling at least part of the fluidized carbon dioxide-depleted solid adsorbent as obtained in step (d) to step (a).

In accordance with the present invention the regeneration of the solid adsorbent can be carried out at a much lower steam demand than that which is required in conventional stripper units wherein adsorption liquids are regenerated, bringing about a substantial improvement in overall energy efficiency. This is due to the much lower heat capacity of the solid adsorbents versus the liquid amine solvent. Suitably, the process leads to highly attractively low regeneration energy demands in the range of from 0.5 to 5 MJ/kg, preferably in the range of from 0.8 to 2.5 MJ/kg, most preferably in the range of from 1 to 2 MJ/kg.

### Detailed description of the invention

The present invention relates to a process for removing carbon dioxide from a gas stream. The process is suitable for any gas comprising carbon dioxide. For example, the gases to be treated may be natural gas, synthesis gas, obtained for instance by (catalytic) partial oxidation and/or by steam methane reforming of hydrocarbons, e.g. methane, natural or associated gas, naphtha, diesel and liquid residual fractions, gases originating from coal gasification, coke oven gases, refinery gases, hydrogen and hydrogen containing gases, and flue gases. Suitably, the gas comprises in the range of from 0.25 to 70% (v/v) of carbon dioxide, preferably from 1 to 45% (v/v). In the event that the gas is a flue gas, the amount of carbon dioxide will generally be lower, suitably from 0.25 to 20% (v/v) and the gas will usually also comprise oxygen, preferably in the range of from 0.25 to 20% (v/v), more preferably from 0.5 to 15% (v/v), still more preferably from 1 to 10% (v/v). As the temperature of the gas stream to be treated will typically be relatively high, preferably the gas stream is cooled prior to being subjected to step (a). Cooling of the gas stream prior to being subjected to step (a) may be done by means known in the art, for example using a fan, a cooler or a gas-gas exchanger.

In accordance with the present invention the gas stream to be treated is contacted in step (a) with a fluidized solid adsorbent in a riser adsorption zone. The solid adsorbent is fluidized using any suitable gas that is inert to the carbon dioxide adsorption reaction. Examples of such inert gases are air, nitrogen, or combinations thereof. It might also be possible to use part or whole of the carbon dioxide-depleted gas stream, that has been separated from the fluidized carbon dioxide-enriched solid adsorbent in step b) of the process of the invention, as gas to obtain fluidized solid adsorbent in the riser. However, in a preferred embodiment of the invention, the carbon dioxide containing gas stream that needs to be treated will fluidize the solid adsorbent sufficiently in the riser. The advantage of using the carbon dioxide containing gas stream as fluidizing medium is that the gas stream is not further diluted with another gas, resulting in a higher efficiency of the reaction and the reactor space. It might, however, in some cases be needed to add extra gas as fluidizing medium. When the concentration of carbon dioxide in the gas stream is high, the solid adsorbent particles become too heavy due to the adsorption of carbon dioxide and the decreased amount of gas available due to the adsorption of the carbon dioxide gas. In this case it would be very advantageous to recycle the carbon dioxide depleted gas stream and add this to the riser reactor as fluidizing medium.

In accordance with the present invention the gas stream to be treated is contacted in step (a) with a fluidized solid adsorbent in a riser adsorption zone to obtain a carbon dioxide-depleted gas stream and fluidized carbon dioxide-enriched solid adsorbent. Suitably, the solid adsorbent is a carrier material that has been impregnated or grafted with one or more carbon dioxide absorbing compounds. Preferably, the solid adsorbent comprises a carrier material selected from the group consisting of activated carbons, zeolites, metal-organic frameworks, and zeolitic-imidazolate frameworks, silica, silica aerogels.

Preferably, the one or more carbon dioxide absorbing compounds comprise one or more amines. Suitable amines to be used include primary, secondary and/or tertiary amines, especially amines. Suitable examples include monoethanol amine (MEA), diethanolamine (DEA), triethanolamine (TEA), diisopropanolamine (DIPA) and methyldiethanolamine (MDEA) or mixtures thereof. A preferred amine is a secondary or tertiary amine, preferably an amine compound derived from ethanol amine, more especially DIPA, DEA, MMEA (monomethylethanolamine), MDEA, or DEMEA (diethyl-monoethanolamine), preferably DIPA or MDEA. Preferably, use is made of one or more polyethylene amines. Suitable examples include diethyleneamine, triethylenetetraamine, tetraethylenepentamine, tetraacetylethylenediamine, and polyethyleneimine. More preferably, use is made of polyethyleneimine, tetraethylenepentamine, polyethylenehexamne, or any mixture thereof.

Preferably, step (a) is carried out at a temperature in the range of from 20-100 °C and a pressure in the range of from 1-100 bara, preferably in the range of from 1-20 bara, and more preferably in the range of from 1-10 bara. Suitably, the volume ratio between the gas stream and solid adsorbent in step (a) is in the range of from 5-200. Step (a) results in a gas stream with a reduced carbon dioxide content and fluidized carbon dioxide-enriched solid adsorbent. Suitably, more than 80%, preferably more than 90% and more preferably more than 95% of the carbon dioxide is removed.

In step (b) at least part of the carbon dioxide-depleted gas stream is separated from the fluidized carbon dioxide-enriched solid adsorbent. Preferably, substantially all of the fluidized carbon dioxide-enriched solid adsorbent is separated from the fluidized carbon dioxide-enriched solid adsorbent. Preferably, additional carbon dioxide-depleted solid adsorbent is added to the at least part of the fluidized carbon dioxide-enriched solid adsorbent as obtained in step (b) before it is passed to the riser regeneration zone in step (c). Preferably, the additional carbon dioxide-depleted solid adsorbent to be used in accordance with the present invention is fresh solid adsorbent. In step (b) at least part of the carbon dioxide-depleted gas stream as obtained in step (a) can be withdrawn. As this gas stream comprises low concentrations of carbon dioxide, it may now be vented into the atmosphere, or used elsewhere.

In step (c) at least part of the fluidized carbon dioxide-enriched solid adsorbent as obtained in step (b) is passed to a riser regeneration zone to obtain a carbon dioxide-enriched gas stream and a fluidized carbon dioxide-depleted solid adsorbent. Preferably, substantially all of the fluidized carbon dioxide-enriched solid adsorbent as obtained in step (b) is passed to the riser regeneration zone in step (c). Preferably, step (c) is carried out at a temperature in the range of from 105-250 °C and a pressure in the range of from 1-100 bara, preferably in the range of from 1-20 bara, and more preferably in the range of from 1-10 bara Suitably, in step (c) the volume ratio between steam and carbon dioxide-enriched solid adsorbent is in the range of from 1-100.

Preferably, in steps (a) and (b) the same pressure is applied.

In step (d) at least part of the carbon dioxide-enriched gas stream as obtained in step (c) is separated from the fluidized carbon dioxide-depleted solid adsorbent as obtained in step (c). Preferably, substantially all of the carbon dioxide-enriched gas stream as obtained in step (c) is separated from the fluidized carbon dioxide-depleted solid adsorbent as obtained in step (c).

In step (e) at least part of the fluidized carbon dioxide-depleted solid adsorbent as obtained in step (d) is recycled to step (a). Preferably, substantially all of the fluidized carbon dioxide-depleted solid adsorbent as obtained in step (d) is recycled to the riser adsorption zone in step (a).

In the process according to the present invention, in the bottom part of the riser regeneration zone additional lift gas is added to the riser regeneration zone. Suitable examples of such additional lift gases include gases such as nitrogen, air, carbon dioxide, and steam. Preferably, the additional lift gas comprises steam.

In accordance with the present invention at least part of the fluidized carbon dioxide-enriched solid adsorbent as obtained in step (b) flows in a continuous manner to the riser regeneration zone and at least part of the carbon dioxide-depleted solid adsorbent as obtained in step (d) flows in a continuous manner to the riser adsorption zone.

In steps (a) and (c), the solid adsorbent has a residence time in the range of from 1-10 seconds in respectively the riser adsorption zone and the riser regeneration zone.

Suitably, the separation in respective steps (b) and (d) is carried out by means of one or more cyclones.

In the process according to the present invention at least part of the fluidized carbon dioxide-depleted solid adsorbent as obtained in step (d) is cooled before it is recycled in step (e) to step (a). Preferably, substantially all of the fluidized carbon dioxide-depleted solid adsorbent as obtained in step (d) is cooled before it is recycled in step (e) to step (a). Such cooling can suitably be carried out by means of a heat exchanger.

In the context of the present invention the phrase "substantially all" is meant to mean more than 95%, preferably more than 98%, and more preferably more than 99% of the solid adsorbent or gas stream in question.

Suitably, the one or more carbon dioxide absorbing compounds comprises one or more amines. The amines may be a single primary, secondary or tertiary amine, or may be mixtures of primary amines, secondary amines and/or tertiary amines.

In the process according to the present invention any known type of riser reactor can suitably be used in steps (a) and (c). In steps (a) and (c) use can be made of the same type of riser reactor or different types of riser reactors. Preferably, use is made in steps (an) and (c) of the same type of riser reactor.

Preferably, the height-to diameter ratio of the riser reactors to be used in accordance with the present invention is in the range of from 1-15. The riser adsorption zone is preferably equipped with internal cooling means to control the temperature in the riser adsorption zone.

In addition to carbon dioxide other contaminants can also suitably be removed from the gas stream. Such other contaminants can for instance be hydrogen sulphide, COS, sulphur oxide and nitrogen oxide.

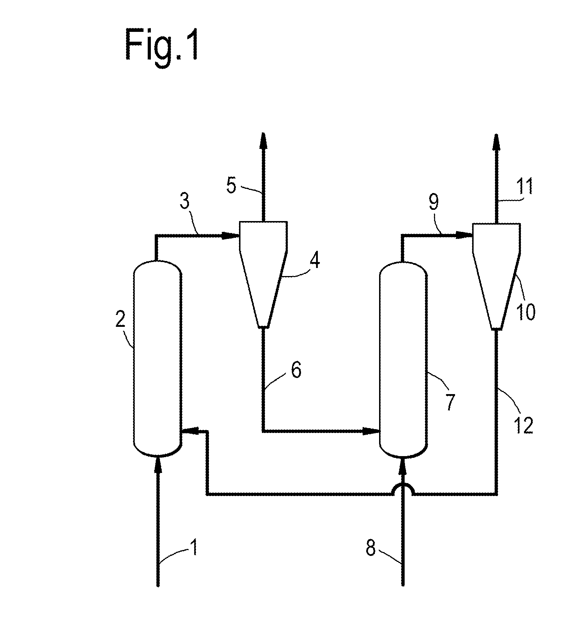

One embodiment of the present invention is illustrated in Figure 1.

In Figure 1, a gas stream comprising carbon dioxide is led via line 1 to a riser adsorption zone 2. In riser adsorption zone 2, the gas stream is contacted with a solid adsorbent, thereby transferring carbon dioxide from the gas stream to the solid adsorbent to obtain a carbon dioxide-depleted gas stream and fluidized carbon dioxide-enriched solid adsorbent. The carbon dioxide-depleted gas and fluidized carbon dioxide-enriched solid adsorbent are discharged via line 3 and separated from each other in a cyclone 4. The carbon dioxide-depleted gas stream is withdrawn from the cyclone 4 via line 5. The fluidized carbon dioxide-enriched solid adsorbent is led from the cyclone 4 via line 6 to a bottom part of the riser regeneration zone 7, where it is contacted with low pressure (LP) steam which is introduced into the riser regeneration zone 7 via line 8. In the riser regeneration zone 7 the fluidized carbon dioxide-enriched solid adsorbent is regenerated to obtain a carbon dioxide-enriched gas stream and a fluidized carbon dioxide-depleted solid adsorbent which are withdrawn from the riser regeneration zone 7 via line 9 and passed to cyclone 10, where the carbon dioxide-enriched gas stream and the fluidized carbon dioxide-depleted solid adsorbent are separated from each other. The carbon dioxide-enriched gas stream is withdrawn via line 11 and the fluidized carbon dioxide-depleted solid adsorbent is recycled to the riser adsorption zone 2.

## Claims

1. A process for removing carbon dioxide from a carbon dioxide containing gas stream comprising the steps of:
(a) contacting the carbon dioxide containing gas stream with fluidized solid adsorbent in a riser adsorption zone to obtain a carbon dioxide-depleted gas stream and fluidized carbon dioxide-enriched solid adsorbent;
(b) separating at least part of the carbon dioxide-depleted gas stream from the fluidized carbon dioxide-enriched solid adsorbent;
(c) passing at least part of the fluidized carbon dioxide-enriched solid adsorbent as obtained in step (b) to a riser regeneration zone to obtain a carbon dioxide-enriched gas stream and a fluidized carbon dioxide-depleted solid adsorbent;
(d) separating at least part of the carbon dioxide-enriched gas stream as obtained in step (c) from the fluidized carbon dioxide-depleted solid adsorbent as obtained in step (c); and
(e) recycling at least part of the fluidized carbon dioxide-depleted solid adsorbent as obtained in step (d) to step (a).

2. A process according to claim 1, wherein substantially all of the fluidized carbon dioxide-enriched solid adsorbent as obtained in step (b) is passed to the riser regeneration zone in step (c).

3. A process according to claim 1 or 2, wherein substantially all of the fluidized carbon dioxide-depleted solid adsorbent as obtained in step (d) is recycled to the riser adsorption zone in step (a).

4. A process according to any one of claims 1-3, wherein additional carbon dioxide-depleted solid adsorbent is added to the at least part of the fluidized carbon dioxide-enriched solid adsorbent as obtained in step (b) before it is passed to the riser regeneration zone in step (c).

5. A process according to claim 4, wherein the additional carbon dioxide-depleted solid adsorbent is fresh solid adsorbent.

6. A process according to any one of claims 1-5, wherein in the bottom part of the riser regeneration zone additional lift gas is added to the riser regeneration zone.

7. A process according to claim 6, wherein the additional lift gas comprises steam.

8. A process according to any one of claims 1-7, wherein the solid adsorbent is a carrier material that has been impregnated or grafted with one or more carbon dioxide absorbing compounds.

9. A process according to claim 8, wherein the carrier material is selected from the group consisting of activated carbons, zeolites, metal-organic frameworks, and zeolitic-imidazolate frameworks.

10. A process according to claim 8 or 9, wherein the one or more carbon dioxide absorbing compounds comprise one or more amines.

11. A process according to any one of claims 1-10, wherein step (a) is carried out at a temperature in the range of from 20-100 °C and a pressure in the range of from 1-100 bar.

12. A process according to any one of claims 1-11, wherein step (c) is carried out at a temperature in the range of from 105-250 °C and a pressure in the range of from 1-20 bar.

13. A process according to any one of claims 1-12, wherein the volume ratio between the gas stream and solid adsorbent in step (a) is in the range of from 5-200

14. A process according to any one of claims 1-13, wherein in step (c) the volume ratio between steam and carbon dioxide-enriched solid adsorbent is in the range of from 1-100.

15. A process according to any one of claims 1-14, wherein the solid adsorbent has a residence time in the range of from 1-10 seconds in steps (a) and (c).
